(19) **Europäisches Patentamt**
**European Patent Office**
**Office européen des brevets**

(11) **EP 3 996 964 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **20737423.2**

(22) Anmeldetag: **06.07.2020**

(51) Internationale Patentklassifikation (IPC):
*G01P 5/14* (2006.01)   *B60W 30/14* (2006.01)
*B60W 50/00* (2006.01)

(52) Gemeinsame Patentklassifikation (CPC):
**B60W 30/14; B60W 50/0097; G01P 5/14;**
B60W 2555/20; B60W 2556/50; B60W 2720/10

(86) Internationale Anmeldenummer:
**PCT/EP2020/068938**

(87) Internationale Veröffentlichungsnummer:
**WO 2021/004986 (14.01.2021 Gazette 2021/02)**

(54) **VORRICHTUNG ZUR REGELUNG EINER FAHRGESCHWINDIGKEIT**

DEVICE FOR CONTROLLING A DRIVING SPEED

PROCÉDÉ DE RÉGULATION D'UNE VITESSE DE DÉPLACEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2019 DE 102019004883**

(43) Veröffentlichungstag der Anmeldung:
**18.05.2022 Patentblatt 2022/20**

(73) Patentinhaber: **MAN Truck & Bus SE**
**80995 München (DE)**

(72) Erfinder:
• **DETHLEFFSEN, Niels**
**80995 München (DE)**
• **PIETSCH, Robert**
**80995 München (DE)**
• **BEHRINGER, Julia**
**80995 München (DE)**

(74) Vertreter: **v. Bezold & Partner Patentanwälte - PartG mbB**
**Ridlerstraße 57**
**80339 München (DE)**

(56) Entgegenhaltungen:
WO-A1-2012/158097     WO-A1-2017/164792
DE-A1- 102016 223 299     DE-B3- 102005 045 891
US-A1- 2019 138 021

# EP 3 996 964 B1

**Beschreibung**

Die vorliegende Erfindung betrifft eine Technik zur Regelung einer Fahrgeschwindigkeit eines Nutzfahrzeugs. Insbesondere sind eine Vorrichtung zur Regelung einer Fahrgeschwindigkeit und ein entsprechendes Nutzfahrzeug beschrieben.

Heute erfolgt eine Optimierung des Treibstoffverbrauchs eines Lastkraftwagens (LKWs) oder Busses dadurch, dass die Maximalgeschwindigkeit bezüglich des Fahrwegs des Nutzfahrzeugs in einem Antriebsmodus beispielsweise auf 85 km/h anstelle 90 km/h (insbesondere bei LKWs) begrenzt wird. Zur weiteren Optimierung kann eine Geschwindigkeitsregelanlage topografische Karten mit einer satellitenbasierten Ortung kombinieren, die auch als GPS-Tempomat bezeichnet wird. Dazu wird bergauf im Antriebsmodus die Fahrgeschwindigkeit gegenüber einer vom Fahrer vorgegebenen Durchschnittsgeschwindigkeit reduziert. Bergab in einem Schubmodus schwingt die Fahrgeschwindigkeit über die Durchschnittsgeschwindigkeit, um so ohne zusätzlichen Treibstoffeinsatz die im Vergleich zur Durchschnittsgeschwindigkeit zuvor verlorene Zeit wieder aufzuholen.

So offenbart die WO 2012/158097 A1 ein ökonomisches Cruise-Control-System, bei dem eine Referenzgeschwindigkeit von einem Motorsystem angefordert wird, wobei sich die Referenzgeschwindigkeit von einer gewählten Sollgeschwindigkeit unterscheiden kann. Dabei ist bei Abweichung der Referenzgeschwindigkeit von der Sollgeschwindigkeit eine Anpassung der Sollgeschwindigkeit gestattet. Die Anpassung basiert zumindest teilweise auf der Eingabe des Nutzers, sodass dem Nutzer ein erhöhtes Kontrollgefühl über die Fahrzeuggeschwindigkeit vermittelt wird.

Die US 2019/0138021 A1 zeigt ein System und Verfahren zur Implementierung eines adaptiven Geschwindigkeitsregelungssystems, das bei Gegenwind automatisch die Geschwindigkeit des Fahrzeugs verlangsamt und bei Rückenwind die Geschwindigkeit erhöht, sodass die mit Gegenwind verbundenen Energiekosten reduziert und die bei Rückenwind erzielten Energievorteile genutzt werden. Das System nutzt mehrere Sensoren, wie z. B. Windgeschwindigkeit, Fahrzeuggeschwindigkeit und Fahrzeugabstandsdetektoren, um eine Systemfunktionalität zu gewährleisten.

DE102005045891B3 beschreibt eine Vorrichtung zur Regelung einer Fahrgeschwindigkeit eines Nutzfahrzeug.

Da herkömmlichen Geschwindigkeitsregelanlagen die Fahrgeschwindigkeit nur nach vorhersehbaren Umgebungsbedingungen regeln, kann es sein, dass das Nutzfahrzeug beim Anstieg langsamer fährt - und dadurch mehr Fahrzeit benötigt - als für einen optimalen oder vorgegebenen Kraftstoffverbrauch notwendig wäre, beispielsweise weil Rückenwind es erlaubt hätte, mit demselben Kraftstoffeinsatz schneller zu fahren. Entsprechende Überlegungen gelten auch für elektrische Antriebe.

Zudem können herkömmliche Geschwindigkeitsregelanlagen den Kraftstoffverbrauch sogar verschlechtern. Da die Fahrgeschwindigkeit nur nach vorhersehbaren Umgebungsbedingungen geregelt wird, kann es sein, dass das Nutzfahrzeug beim Anstieg zu einer größeren Übersetzung zurückschaltet und dadurch mit einer für die Fahrzeit suboptimalen zu kleinen Fahrgeschwindigkeit oder einer für den Kraftstoffverbrauch suboptimalen zu großen Motordrehzahl im Antriebsmodus fährt, beispielsweise weil aufgrund des am Anstieg auf das Nutzfahrzeug einwirkenden Rückenwinds der Schaltvorgang gar nicht erforderlich gewesen wäre.

Dadurch können herkömmliche Geschwindigkeitsregelanlagen das Ziel eines optimalen Kraftstoffverbrauchs verfehlen oder diesen sogar verschlechtern.

Somit besteht die Aufgabe, die Regelung der Fahrgeschwindigkeit zu verbessern, insbesondere zur Optimierung von Fahrzeit und/oder Energieverbrauch.

Diese Aufgabe wird durch eine Vorrichtung und ein entsprechendes Nutzfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Vorrichtung zur Regelung einer Fahrgeschwindigkeit eines Nutzfahrzeugs bereitgestellt. Die Vorrichtung umfasst einen Fahrgeschwindigkeitssensor, der dazu ausgebildet ist, die Fahrgeschwindigkeit des Nutzfahrzeugs zu erfassen. Die Vorrichtung umfasst ferner einen Windgeschwindigkeitssensor oder eine Datenschnittstelle, der bzw. die dazu ausgebildet ist, eine Windgeschwindigkeit am oder vor dem Nutzfahrzeug zu erfassen. Die Vorrichtung umfasst ferner eine Ortungseinheit, die dazu ausgebildet ist, das Nutzfahrzeug auf einem vom Nutzfahrzeug befahrenen Fahrweg zu orten. Die Vorrichtung umfasst ferner eine Regelungseinheit, die dazu ausgebildet ist, die Fahrgeschwindigkeit des Nutzfahrzeugs abhängig von der erfassten Fahrgeschwindigkeit, der erfassten Windgeschwindigkeit und einer gemäß der Ortung auf dem Fahrweg dem Nutzfahrzeug vorausliegenden Topografie zu regeln. Die geregelte Fahrgeschwindigkeit ist bei der dem Nutzfahrzeug vorausliegenden Topografie eine steigende (beispielsweise streng monoton steigende) Funktion der erfassten Windgeschwindigkeit in Richtung der Fahrgeschwindigkeit.

Da die geregelte Fahrgeschwindigkeit bei der dem Nutzfahrzeug vorausliegenden Topografie eine steigende Funktion der erfassten Windgeschwindigkeit in Richtung der Fahrgeschwindigkeit ist, kann bei einem Ausführungsbeispiel der Vorrichtung an einem Anstieg (als einem Beispiel der vorausliegenden Topografie) die geregelte Fahrgeschwindigkeit größer sein als eine allein aufgrund der vorausliegenden Topografie vorausberechnete Fahrgeschwindigkeit, falls die erfasste Windgeschwindigkeit im Bezugssystem des Nutzfahrzeugs oder im Bezugssystem des Fahrwegs in Richtung der Fahrgeschwindigkeit positiv ist (was auch als treibender bzw. allgemeiner Rückenwind bezeichnet wird). Dadurch kann Fahrzeit und/oder Antriebsenergie eingespart oder optimiert werden.

Eine jede Abhängigkeit von der vorausliegenden Topografie kann als eine Abhängigkeit von einem Steigungswinkel des vorausliegenden Fahrwegs realisiert sein. Der Steigungswinkel kann ein Winkel zwischen dem Fahrweg in Längsrichtung und einer horizontalen Ebene sein.

Alternativ oder ergänzend kann der Steigungswinkel positiv für einen Anstieg oder negativ für ein Gefälle sein.

Der Steigungswinkel kann eine Funktion einer Weglänge entlang des Fahrwegs sein. Beispielsweise kann die Abhängigkeit von der vorausliegenden Topografie eine Abhängigkeit vom Steigungswinkel am Ort des Nutzfahrzeugs und einer Änderung des Steigungswinkels auf dem vorausliegenden Fahrweg umfassen, beispielsweise eine erste und/oder zweite Ableitung des Steigungswinkels als Funktion der Weglänge.

Die Regelungseinheit kann eine Beschleunigung (insbesondere eine Kraftstoffeinspritzung einer Brennkraftmaschine und/oder eine Stromregelung einer Elektromaschine) und/oder eine Verzögerung (insbesondere ein Bremsen und/oder eine Rekuperation) des Nutzfahrzeugs abhängig von einer Differenz, $v_F^{(soll)} - v_F^{(ist)}$, zwischen Soll-Wert der Fahrgeschwindigkeit (d.h. der geregelten Fahrgeschwindigkeit $v_F^{(soll)}$) und Ist-Wert der Fahrgeschwindigkeit (d.h. der erfassten Fahrgeschwindigkeit $v_F^{(ist)}$) berechnen, an eine Motorsteuerung ausgeben, steuern und/oder regeln.

Die "Regelung" der Fahrgeschwindigkeit mittels der Regelungseinheit kann darin bestehen, dass die erfasste Fahrgeschwindigkeit eine Eingangsgröße der Regelungseinheit ist, d.h., dass die geregelte Fahrgeschwindigkeit (z.B. die gesteuerte Beschleunigung oder Verzögerung) auch von der erfassten Fahrgeschwindigkeit abhängt.

In jedem Ausführungsbeispiel kann die geregelte Fahrgeschwindigkeit ferner einer oberen Geschwindigkeitsgrenze und/oder einer unteren Geschwindigkeitsgrenze unterliegen. Bei Erreichen der oberen Geschwindigkeitsgrenze kann die Regelungseinheit die geregelte Geschwindigkeit auf diese begrenzen. Die Regelungseinheit kann verhindern, dass die geregelte Geschwindigkeit die untere Geschwindigkeitsgrenze unterschreitet.

Beispielsweise kann der Fahrer des Nutzfahrzeugs Parameter der Regelung festlegen. Die Parameter der Regelung können eine Durchschnittsgeschwindigkeit und optional mindestens eine Größe einer (beispielsweise oberen und/oder unteren) Abweichung von der Durchschnittsgeschwindigkeit umfassen. Aus den Parametern der Regelung kann die Regelungseinheit die entsprechende Geschwindigkeitsgrenze bestimmen und bei der Regelung anwenden.

Die Regelungseinheit kann aufgrund der Abhängigkeit von der erfassten Windgeschwindigkeit die Fahrgeschwindigkeit relativ zur Umgebungsluft des Nutzfahrzeugs regeln. Beispielsweise kann die allein aufgrund der Topografie vorausberechnete Fahrgeschwindigkeit relativ zur Windgeschwindigkeit bei der Regelung der Fahrgeschwindigkeit angewendet werden. Die erfasste und/oder geregelte Fahrgeschwindigkeit des Nutzfahrzeugs kann jeweils als Wert der Geschwindigkeit des Nutzfahrzeugs gegenüber dem Fahrweg berechnet oder ausgegeben werden. Beispielsweise können die erfasste Windgeschwindigkeit und die allein aufgrund der Topografie vorausberechnete Fahrgeschwindigkeit addiert werden, beispielsweise gewichtet addiert werden.

Die erfasste Windgeschwindigkeit (insbesondere in Richtung der Fahrgeschwindigkeit) umfasst eine Windgeschwindigkeit im Bezugssystem des Nutzfahrzeugs. Die im Bezugssystem des Nutzfahrzeugs erfasste Windgeschwindigkeit in Richtung der Fahrgeschwindigkeit kann als Fahrtwindgeschwindigkeit negativ sein.

Die geregelte Fahrgeschwindigkeit ist

$$\text{(erste Alternative)} \quad v_F^{(soll)} = v_F^{(topo)} + \varepsilon \cdot v'_W^{(ist)}$$

(vorzugsweise angewendet falls $0 < v'_W^{(ist)}$) oder

$$\text{(zweite Alternative)} \quad v_F^{(soll)} = v_F^{(topo)} + \varepsilon \cdot (v'_W^{(ist)} + v_F^{(ist)})$$

wobei $v_F^{(topo)}$ eine aufgrund der vorausliegenden Topografie vorausberechnete Fahrgeschwindigkeit ist, $v'_W^{(ist)}$ die erfasste Windgeschwindigkeit im Bezugssystem des Nutzfahrzeugs ist, ein Parameter $\varepsilon$ mit $0 < \varepsilon \leq 1$ einen Grad einer Berücksichtigung der Windgeschwindigkeit ist, und gegebenenfalls $v_F^{(ist)}$ die erfasste Fahrgeschwindigkeit ist.

Der Fall $v'_W^{(ist)} + v_F^{(ist)} > 0$ kann auch als Rückenwind (beispielsweise allgemeiner Rückenwind) bezeichnet werden. Der Fall $v'_W^{(ist)} + v_F^{(ist)} < 0$ kann auch als Gegenwind bezeichnet werden. Der Fall $v'_W^{(ist)} > 0$ kann auch als treibender Rückenwind bezeichnet werden. Die Regelung gemäß der ersten Alternative kann insbesondere bei treibendem Rückenwind eingesetzt werden (oder als "Segeln" bezeichnet werden). Die Regelung gemäß der zweiten Alternative kann in jedem Fall eingesetzt werden (oder als Regelung der Fahrgeschwindigkeit relativ zur Windgeschwindigkeit bezeichnet werden).

Alternativ oder ergänzend umfasst die erfasste Windgeschwindigkeit (insbesondere in Richtung der Fahrgeschwindigkeit) eine Windgeschwindigkeit in einem Bezugssystem des vom Nutzfahrzeug befahrenen Fahrwegs.

Die Regelung der Fahrgeschwindigkeit kann von einer Differenz zwischen der erfassten Windgeschwindigkeit in Richtung der Fahrgeschwindigkeit und der erfassten Fahrgeschwindigkeit (erste Alternative) oder direkt von der erfassten Windgeschwindigkeit (zweite Alternative) abhängen.

Die geregelte Fahrgeschwindigkeit kann

$$\text{(erste Alternative)} \quad v_F^{(soll)} = v_F^{(topo)} + \varepsilon \cdot (v_W^{(ist)} - v_F^{(ist)})$$

(vorzugsweise angewendet falls $0 < v_F^{(ist)} < v_W^{(ist)}$) oder

$$\text{(zweite Alternative)} \quad v_F^{(soll)} = v_F^{(topo)} + \varepsilon \cdot v_W^{(ist)}$$

sein, wobei $v_F^{(topo)}$ eine aufgrund der vorausliegenden Topografie vorausberechnete Fahrgeschwindigkeit ist, $v_W^{(ist)}$ die erfasste Windgeschwindigkeit in Richtung der Fahrgeschwindigkeit ist, ein Parameter $\varepsilon$ mit $0 < \varepsilon \leq 1$ einen Grad einer Berücksichtigung der Windgeschwindigkeit ist, und gegebenenfalls $v_F^{(ist)}$ die erfasste Fahrgeschwindigkeit ist.

Der Fall $v_W^{(ist)} > 0$ kann auch als Rückenwind (beispielsweise allgemeiner Rückenwind) bezeichnet werden. Der Fall $v_W^{(ist)} < 0$ kann auch als Gegenwind bezeichnet werden. Der Fall $v_W^{(ist)} > v_F^{(ist)}$ kann auch als treibender Rückenwind bezeichnet werden. Die Regelung gemäß der ersten Alternative kann insbesondere bei treibendem Rückenwind eingesetzt werden oder als "Segeln" bezeichnet werden. Die Regelung gemäß der zweiten Alternative kann in jedem Fall eingesetzt werden oder als Regelung der Fahrgeschwindigkeit relativ zur Windgeschwindigkeit bezeichnet werden.

Die aufgrund der vorausliegenden Topografie vorausberechnete Fahrgeschwindigkeit kann bezüglich des Fahrwegs (d.h., im ruhenden Bezugsystem des Fahrwegs) bestimmt sein.

Der Parameter $\varepsilon$ des Grads der Berücksichtigung der Windgeschwindigkeit kann von der vorausliegenden Topografie und/oder einem Wirkungsgrad-optimierten Betriebspunkt oder Betriebsbereich eines Antriebsstrangs des Nutzfahrzeugs abhängen.

Die durch einen Rückenwind (beispielsweise einen treibenden Rückenwind und erst recht durch einen allgemeinen Rückenwind) dem Nutzfahrzeug zugeführte mechanische Leistung kann geringer sein als die für das Aufrechterhalten der geregelten Fahrgeschwindigkeit notwendige Antriebsleistung (beispielsweise aufgrund eines Anstiegs und/oder des Rollwiderstands). Beispielsweise ist bei einem ebenen Fahrweg aufgrund des Rollwiderstands Leistung vom Antriebstrang notwendig selbst wenn der Soll-Wert der Fahrgeschwindigkeit in der jeweils ersten Alternative (z.B. der Soll-Wert $v_F^{(topo)} + v_W^{(ist)} - v_F^{(ist)} = v_F^{(topo)} + v'_w{}^{(ist)}$ bei $\varepsilon = 1$, d.h. um den Luftwiderstand bei treibendem Rückenwind vollständig zu eliminieren) erreicht werden soll, und erst recht in der zweiten Alternative (z.B. wenn die Windgeschwindigkeit eine Elimination des Luftwiderstands gar nicht zulässt).

In einem Ausführungsbeispiel kann im Fall eines Gefälles die Höhenenergie (d.h., die potentielle Energie des Schwerefelds) die notwendige Antriebsleistung aufbringen, so dass (beispielsweise in der ersten oder zweiten Alternative) $\varepsilon = 1$ im Fall eines Gefälles (als Beispiel der vorausliegenden Topografie) sein kann. Im Vergleich zum Soll-Wert der Fahrgeschwindigkeit (beispielsweise in der ersten oder zweiten Alternative) bei $\varepsilon = 1$ kann im Fall eines Anstiegs der Antriebsstrang neben der Höhenenergie die Arbeit gegen den Luftwiderstand beispielsweise nur teilweise aufbringen, um in einem Wirkungsgrad-optimierten Betriebsbereich zu arbeiten, so dass $0 < \varepsilon < 1$ im Fall eines Anstiegs (als Beispiel der vorausliegenden Topografie) sein kann.

In jedem Ausführungsbeispiel kann der Antriebsstrang die Brennkraftmaschine und/oder die Elektromaschine (E-Maschine) umfassen.

Die Datenschnittstelle kann eine Funkdatenschnittstelle zu einem Server umfassen. Der Server kann Wetterdaten bereitstellen. Die Wetterdaten können die Windgeschwindigkeit am oder vor dem georteten Nutzfahrzeug umfassen.

Die Funkdatenschnittstelle kann zum Datenaustausch mittels eines zellularen Mobilfunknetzwerks ausgebildet sein. Die Funkdatenschnittstelle und/oder das Mobilfunknetzwerk können mit einer Radiozugangstechnik gemäß einem Standard des "Third Generation Partnership Project" (3GPP) kommunizieren, insbesondere gemäß "Long Term Evolution" (LTE) oder "Fifth Generation New Radio" (5G NR).

Die erfasste Windgeschwindigkeit kann auf Satellitenaufnahmen und/oder bodennahen Messungen basieren. Beispielsweise können die Wetterdaten Flugwetterdaten umfassen. Die bodennahen Messungen können mittels eines Netzwerks von Messstationen parallel zum Fahrweg (insbesondere entlang von Autobahnen) erfasst werden.

Der Windgeschwindigkeitssensor kann Dehnungsmessstreifen umfassen, beispielsweise zwischen einem Fahrgestell und einer Karosserie des Nutzfahrzeugs, insbesondere zwischen Fahrgestell und Fahrerhaus des Nutzfahrzeugs. Die Dehnungsmessstreifen können dazu ausgebildet sein, einen von der Windgeschwindigkeit im Bezugssystem des Nutzfahrzeugs abhängigen Staudruck zu erfassen, optional einschließlich eines Anpralldrucks eines Niederschlags.

Die Dehnungsmessstreifen können zwischen dem Fahrgestell (auch: Grundgerüst oder Rahmen) des Nutzfahrzeugs und der Karosserie (insbesondere einer Front) des Nutzfahrzeugs angeordnet sein. Alternativ oder ergänzend können die Dehnungsmessstreifen innerhalb der Front des Nutzfahrzeugs, beispielsweise an einem vertikalen Flächenabschnitt der Front, angeordnet sein.

Der Niederschlag kann Regentropfen und/oder Schnee und/oder Hagelkörner umfassen. Ein Anprallen des Niederschlags an der Karosserie (insbesondere am Fahrerhaus) kann eine horizontale Komponente des Impulses des Niederschlags auf die Karosserie übertragen. Die horizontale Komponente des pro Zeit und Fläche übertragenen Impulses kann dem Anpralldruck entsprechen. Der Staudruck kann sich aus Luftstaudruck aufgrund des Luftwiderstands und dem Anpralldruck zusammensetzen.

Der Windgeschwindigkeitssensor kann mindestens eine an einer Front des Nutzfahrzeugs angeordnete Staudrucksonde (beispielsweise ein Pitot-Rohr oder ein Prandtlesches Staurohr) umfassen. Jede Staudrucksonde kann dazu ausgebildet sein, einen von der Windgeschwindigkeit im Bezugssystem des Nutzfahrzeugs abhängigen Staudruck zu erfassen. Um die Windgeschwindigkeit zu erfassen, kann die mindestens eine Staudrucksonde zusätzlich eine statische Drucksonde zur Messung einer statischen Druckkomponente umfassen.

In jeder Implementierung des Windgeschwindigkeitssensors kann der Staudruck eine Differenz zwischen einer horizontalen Gesamtdruckkomponente und der statischen Druckkomponente umfassen. Beispielsweise kann die Staudrucksonde die horizontale Gesamtdrucckomponente von der statischen Druckkomponente abziehen. Der Dehnungsstreifen kann den Staudruck erfassen.

Der gemessene Staudruck kann quadratisch von der damit erfassten Windgeschwindigkeit abhängen.

Die geregelte Fahrgeschwindigkeit kann generell von der erfassten Windgeschwindigkeit abhängen, falls die erfasste Fahrgeschwindigkeit und/oder die aufgrund der vorausliegenden Topografie vorausberechnete Fahrgeschwindigkeit eine Mindestgeschwindigkeit überschreitet, beispielsweise größer als 60 km/h ist. Unterhalb der Mindestgeschwindigkeit kann die Windgeschwindigkeit bei der Regelung der Fahrgeschwindigkeit unberücksichtigt bleiben.

Die Regelungseinheit kann ferner dazu ausgebildet sein, einen (von der Fahrgeschwindigkeit abhängigen) Schaltpunkt eines automatischen Getriebes im Antriebsstrang des Nutzfahrzeugs bei der Regelung der Fahrgeschwindigkeit zu berücksichtigen. Beispielsweise kann eine allein aufgrund der Topgrafie vorausberechnete Fahrgeschwindigkeit kleiner als der Schaltpunkt sein und die geregelte Fahrgeschwindigkeit kann größer als der Schaltpunkt sein, falls die vorausliegende Topografie einen Anstieg aufweist und die erfasste Windgeschwindigkeit einem Rückenwind entspricht.

Gemäß einem weiteren Aspekt ist eine Vorrichtung zur Regelung einer Fahrgeschwindigkeit eines Nutzfahrzeugs bereitgestellt. Die Vorrichtung umfasst einen Fahrgeschwindigkeitssensor, der dazu ausgebildet ist, die Fahrgeschwindigkeit des Nutzfahrzeugs zu erfassen. Die Vorrichtung umfasst ferner eine Funkdatenschnittstelle, die dazu ausgebildet ist, eine Windgeschwindigkeit am oder vor dem Nutzfahrzeug von einem Server zu erfassen. Der Server stellt Daten bereit, welche die Windgeschwindigkeit am oder vor dem Nutzfahrzeug umfassen. Die Vorrichtung umfasst ferner eine Regelungseinheit, die dazu ausgebildet ist, die Fahrgeschwindigkeit des Nutzfahrzeugs abhängig von der erfassten Fahrgeschwindigkeit und der erfassten Windgeschwindigkeit zu regeln. Die geregelte Fahrgeschwindigkeit ist (beispielsweise bei einer dem Nutzfahrzeug vorausliegenden Topografie) eine steigende (beispielsweise streng monoton steigende) Funktion der erfassten Windgeschwindigkeit in Richtung der Fahrgeschwindigkeit.

Die Vorrichtung kann ferner eine Ortungseinheit umfassen, die dazu ausgebildet ist, das Nutzfahrzeug auf einem vom Nutzfahrzeug befahrenen Fahrweg zu orten. Positionsdaten des georteten Nutzfahrzeugs können (beispielsweise von der Regelungseinheit) über die Funkdatenschnittstelle an den Server gesendet werden. Die vom Server über die Funkdatenschnittstelle abgerufenen Daten können die erfasste Windgeschwindigkeit am oder vor dem georteten Nutzfahrzeug umfassen.

Die Vorrichtung gemäß dem weiteren Aspekt kann ferner eines oder mehrere der Merkmale umfassen, die im Kontext des erstgenannten Aspekts beschrieben sind.

Gemäß noch einem weiteren Aspekt ist ein Kraftfahrzeug, insbesondere ein Nutzfahrzeug, bereitgestellt, dessen Antriebsstrang eine Vorrichtung gemäß dem vorstehenden Aspekt in einer der Ausführungsvarianten umfasst oder von einer solchen Vorrichtung gesteuert wird.

In jedem Aspekt kann das Nutzfahrzeug ein Lastkraftwagen (LKW), eine Zugmaschine oder ein Bus sein.

Weitere Merkmale und Vorteile der Erfindung werden im Folgenden unter Bezugnahme auf die beigefügten Zeichnungen beschrieben. Es zeigen:

Figur 1       eine schematische Seitenansicht eines exemplarischen Nutzfahrzeugs mit einem Ausführungsbeispiel einer Vorrichtung zur Regelung einer Fahrgeschwindigkeit des Nutzfahrzeugs;

Figur 2A      ein schematisches Höhenprofil entlang eines Fahrwegs mit ortsabhängiger Windgeschwindigkeit im Bezugssystem des Fahrwegs;

Figur 2B      ein schematisches Diagramm eines Beispiels einer geregelten Fahrgeschwindigkeit und einer allein aufgrund des Höhenprofils der Figur 2A vorausberechneten Fahrgeschwindigkeit entlang des Fahrwegs unter Berücksichtigung der ortsabhängigen Windgeschwindigkeit; und

Figur 3    eine perspektivische Darstellung eines Ausführungsbeispiels eines Windgeschwindigkeitssensors an der Front des Nutzfahrzeugs.

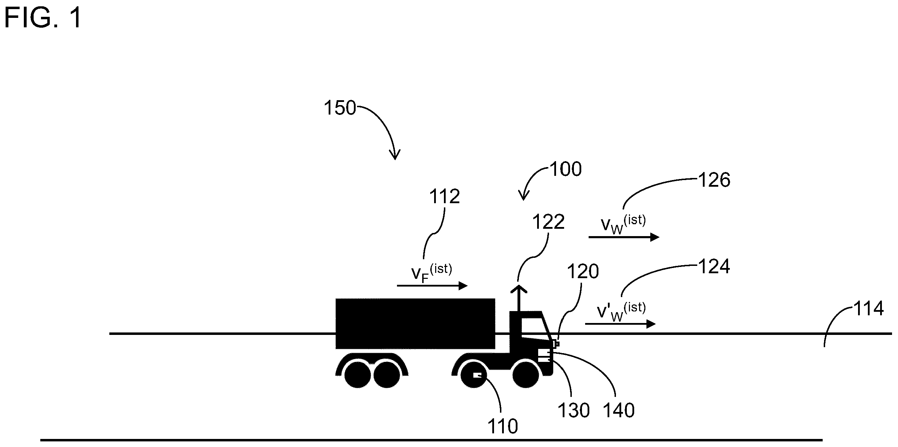

Figur 1 zeigt schematisch ein beispielhaftes Nutzfahrzeug 150 (beispielsweise ein LKW oder Bus) mit einer allgemein mit Bezugszeichen 100 bezeichneten Vorrichtung zur Regelung einer Fahrgeschwindigkeit des Nutzfahrzeugs 150.

Ein erstes Ausführungsbeispiel der Vorrichtung 100 umfasst einen Fahrgeschwindigkeitssensor 110, einen Windgeschwindigkeitssensor 120 und/oder eine Datenschnittstelle 122, eine Ortungseinheit 130 und eine Regelungseinheit 140.

Der Fahrgeschwindigkeitssensor 110 erfasst die Fahrgeschwindigkeit 112 des Nutzfahrzeugs 150. Der Windgeschwindigkeitssensor 120 und/oder die Datenschnittstelle 122 erfassen eine Windgeschwindigkeit 124 bzw. 126 am oder vor dem Nutzfahrzeug (150). Die Windgeschwindigkeit 124 ist im Bezugsystem des Nutzfahrzeugs 150 gemessen. Die Windgeschwindigkeit 126 ist im Bezugsystem eines Fahrwegs 114 (beispielsweise einer Straße oder Autobahn) des Nutzfahrzeugs 150 gemessen. Die Ortungseinheit 130 ortet das Nutzfahrzeug 150 auf dem vom Nutzfahrzeug 150 befahrenen Fahrweg 114, beispielsweise mittels eines globalen Navigationssatellitensystems (insbesondere dem "Global Positioning System" oder GPS; dem Globalen Satellitennavigationssystem GLONASS; "Galileo" und/oder "Beidou") und/oder einem zellularen Mobilfunknetz (insbesondere 4G LTE oder 5G NR).

Die Regelungseinheit 140 ist dazu ausgebildet, die Fahrgeschwindigkeit des Nutzfahrzeugs 150 abhängig von der erfassten Fahrgeschwindigkeit 112, der erfassten Windgeschwindigkeit 124 und/oder 126 und einer gemäß der Ortung auf dem Fahrweg 114 dem Nutzfahrzeug 150 vorausliegenden Topografie 200 zu regeln. Die geregelte Fahrgeschwindigkeit ist bei der dem Nutzfahrzeug 150 vorausliegenden Topografie 200 eine steigende Funktion der erfassten Windgeschwindigkeit 124 und/oder 126 in Richtung der Fahrgeschwindigkeit.

Ein zweites Ausführungsbeispiel der Vorrichtung 100, das mit dem ersten Ausführungsbeispiel kombinierbar ist, umfasst einen Fahrgeschwindigkeitssensor 110, eine Funkdatenschnittstelle 122 und eine Regelungseinheit 140.

Der Fahrgeschwindigkeitssensor 110 erfasst die Fahrgeschwindigkeit 112 des Nutzfahrzeugs 150.

Die Funkdatenschnittstelle 122 erfasst eine Windgeschwindigkeit 126 am oder vor dem Nutzfahrzeug 150 von einem Server. Der Server stellt Daten bereit, welche die Windgeschwindigkeit 126 (beispielsweise im Bezugsystem des Fahrwegs 114 des Nutzfahrzeugs 150) angeben. Die Regelungseinheit 140 kann dazu ausgebildet sein, die Daten vom Server über die Funkdatenschnittstelle abzufragen. Gegebenenfalls kann die Regelungseinheit 140 die Windgeschwindigkeit 126 im Bezugsystem des Fahrwegs 114 mittels der erfassten Fahrgeschwindigkeit 112 umrechnen in die Windgeschwindigkeit 124 im Bezugsystem des Nutzfahrzeugs.

Die Regelungseinheit 140 ist dazu ausgebildet, die Fahrgeschwindigkeit des Nutzfahrzeugs 150 abhängig von der erfassten Fahrgeschwindigkeit 112 und der erfassten Windgeschwindigkeit 124 und/oder 126 zu regeln. Die geregelte Fahrgeschwindigkeit 210 (beispielsweise bei einer dem Nutzfahrzeug 150 vorausliegenden Topografie 200) ist eine steigende Funktion der erfassten Windgeschwindigkeit 124 und/oder 126 in Richtung der Fahrgeschwindigkeit.

In jedem Ausführungsbeispiel kann eine Durchschnittsgeschwindigkeit, die auch als Reisegeschwindigkeit bezeichnet wird, vorgegeben und/oder an der Vorrichtung 100 einstellbar sein. Eine Optimierung (nämlich Minimierung) von Antriebsenergie (beispielsweise Treibstoffverbrauch oder $CO_2$-Emission bei fossilen Kraftstoffen) und Reisegeschwindigkeit ist grundsätzlich ein Zielkonflikt, da bei Fahrgeschwindigkeiten größer als eine Mindestgeschwindigkeit (beispielsweise größer als 60 km/h) der quadratisch mit der Fahrgeschwindigkeit zunehmende Luftwiderstand einen signifikanten oder dominierenden Anteil der Antriebsenergie verursacht.

In jedem Ausführungsbeispiel kann die Regelungseinheit 140 die Fahrgeschwindigkeit über (d.h. relativ zu) dem Fahrweg 114 des Nutzfahrzeugs 150 anhand der Fahrgeschwindigkeit relativ zur Luft um das Nutzfahrzeug 150 derart regeln, dass eine Optimierung des Zielkonfliktes zwischen der Antriebsenergie und der Reisegeschwindigkeit bei Fahrgeschwindigkeiten größer als der Mindestgeschwindigkeit erfolgt. Die Regelung kann alleine oder in Kombination mit Einrichtungen einer herkömmlichen Geschwindigkeitsregelanlagen (z.B. einem GPS-Tempomaten) erfolgen.

Bewegt sich das Nutzfahrzeug 150 mit einer erfassten Fahrgeschwindigkeit 112 (beispielsweise von 80 km/h) über dem Fahrweg 114 und es ist windstill (d.h. die Windgeschwindigkeit 126 im Bezugsystem des Fahrwegs 114 ist null oder klein gegenüber der erfassten Fahrgeschwindigkeit 112), dann ist die Fahrgeschwindigkeit relativ zur Luft gleich der erfassten Fahrgeschwindigkeit 112 (also beispielsweise auch durch die Luft gleich 80 km/h). Entsprechend zeigt sich ein normaler Luftwiderstand. Herrscht jedoch Gegenwind mit 10 km/h (d.h. die Windgeschwindigkeit 126 im Bezugsystem des Fahrwegs 114 ist in Richtung der Fahrgeschwindigkeit gleich -10 km/h), so wirkt ein Luftwiderstand auf das Nutzfahrzeug 150, der einer Fahrgeschwindigkeit von 90 km/h über dem Fahrweg 114 bei Windstille entspricht. Die Vorrichtung 100 ermöglicht, die Fahrgeschwindigkeit bezüglich der Luft (d.h., die negative Windgeschwindigkeit 124 im Bezugsystem des Nutzfahrzeugs 150) zu erfassen und die Fahrgeschwindigkeit davon abhängig zu regeln. Das heißt, die geregelte Fahrgeschwindigkeit über dem Fahrweg 114 wird abhängig von der Fahrgeschwindigkeit bezüglich der Luft geregelt.

Die Fahrgeschwindigkeit durch die Luft kann mittels interner Sensoren, d.h., dem Windgeschwindigkeitssensor 120, oder externen Sensoren, d.h., über die Datenschnittstelle 122 (insbesondere die Funkdatenschnittstelle 122), erfasst werden. Der Windgeschwindigkeitsmesser 120 kann ein Anemometer, ein Staudruckrohr oder eine indirekte Staudruckmessung beispielsweise mittels Dehnungsmessstreifen (DMS) an Lagerpunkten einer Kabine des Nutzfahrzeugs 150 umfassen. Die Daten (insbesondere die Wetterdaten) des Servers können lokale, ortsausgelöste Wetterdaten, beispielsweise mit GPS-Bezug aus dem Internet sein. Die Windgeschwindigkeit am oder vor dem Nutzfahrzeug 150 wird erfasst durch Abgleich der Daten mit einer Fahrtrichtung und/oder Position gemäß der Ortung des Nutzfahrzeugs 150. Die Ortung kann mittels einem globalen satellitenbasierte Navigationssystem (beispielsweise einem GPS-Signal), einem bordeigenen (beispielsweise kartenbasierten) Navigationssystem des Nutzfahrzeugs 150 oder einer Kombination aus beidem erfolgen.

Die Regelung kann einen Rückenwind nutzen in Form von temporärem Überschwingen der Fahrgeschwindigkeit relativ zum Fahrweg. So kann ein Zeitverlust bei Gegenwind zumindest teils kompensiert werden.

In einer ersten Implementierung der Regelungseinheit 140, beispielsweise in dem ersten Ausführungsbeispiel der Vorrichtung 100, regelt die Regelungseinheit 140 die Fahrgeschwindigkeit bezüglich des Fahrwegs 114 des Nutzfahrzeugs 150 anhand der Fahrgeschwindigkeit durch die Luft (d.h., der Fahrtwindgeschwindigkeit oder der negativen Windgeschwindigkeit 124 im Bezugsystem des Nutzfahrzeugs 150) derart, dass eine Optimierung des Zielkonfliktes von Treibstoffverbrauch ($CO_2$-Emission bei fossilen Brennstoffen) und durchschnittlicher Reisegeschwindigkeit bei Fahrgeschwindigkeiten größer als 60 km/h erfolgt. Diese Regelung kann als "Aero Adaptive Efficient Cruise" (AAEC) bezeichnet werden und/oder eine Weiterbildung eines allein aufgrund der Topografie vorausberechneten Fahrgeschwindigkeit.

Ausführungsbeispiele der Vorrichtung können also in Kombination mit Einrichtungen nach heutigem Stand der Technik (beispielsweise einem GPS-Tempomaten) realisiert werden. Erst durch die Berücksichtig der Windgeschwindigkeit lässt sich in Synergie mit der Topografie eine weitere Optimierung des genannten Zielkonfliktes erreichen.

Beispielsweise bewegt sich das Nutzfahrzeug 150 mit 80 km/h Fahrgeschwindigkeit und es ist windstill. Dann ist auch die Fahrtwindgeschwindigkeit 80 km/h. Entsprechend zeigt sich ein normaler Luftwiderstand. Herrscht jedoch Gegenwind mit 10 km/h, so zeigt sich ein Luftwiderstand, der einer Fahrgeschwindigkeit von 90 km/h bei Windstille entspricht. Dabei geht die Fahrtwindgeschwindigkeit quadratisch in den Luftwiderstand ein.

Ein Ausführungsbeispiel der Vorrichtung 100 kann die geregelte Fahrgeschwindigkeit des Nutzfahrzeugs 150 bei Gegenwind reduzieren, um Treibstoff zu sparen, und im gesetzlich zulässigen Rahmen bei Rückenwind erhöhen, um bei der Reduzierung verlorene Fahrzeit wieder gutzumachen. Beispielsweise tritt der Optimierungseffekt additiv oder überproportional (aufgrund der quadratischen Geschwindigkeitsabhängigkeit) zum Effekt einer allein aufgrund der Topografie vorausberechneten Fahrgeschwindigkeit (z.B. mittels eines herkömmlichen GPS-Tempomaten) auf.

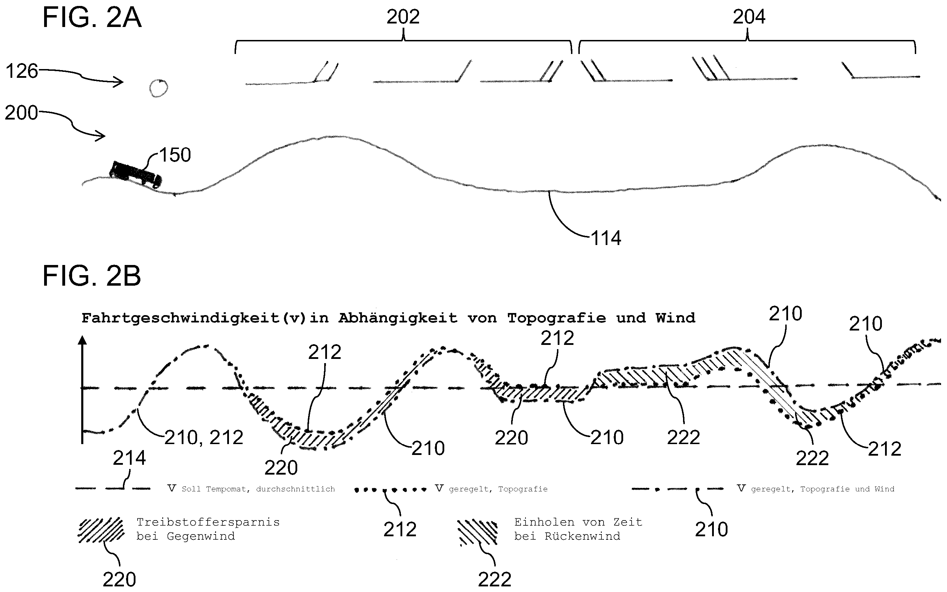

Die Figuren 2A und 2B zeigen schematisch die synergetische Wirkung durch Erweiterung einer herkömmlichen rein topografiebasierten Regelung (z.B. GPS-Tempomaten) zu einem Ausführungsbeispiel der Vorrichtung 100 (z.B. einer AAEC-Regelung). In Figur 2A sind die Windgeschwindigkeit 126 im Bezugsystem des Fahrwegs 114 und die zugehörige Topografie 200 (insbesondere ein Höhenprofil) des Fahrwegs 114 gezeigt.

Der Optimierungseffekt tritt dabei summarisch (beispielsweise über einen Tag oder über viele Tage) auf, weil Gegenwind 202 und Rückenwind 204 aufgrund von Wetteränderungen, einer Änderung der Streckenführung oder einer geschlossenen Strecke ohne Wetteränderung (beispielsweise weil ein LKW Rundkurse fährt) langfristig gleich häufig sind. Im Mittel wird eine vorgegebene Reisegeschwindigkeit 214 erreicht mit weniger Antriebsenergie.

Bei Gegenwind 202 ist die geregelte Fahrgeschwindigkeit 210 kleiner als die allein aufgrund der Topografie vorausberechnete Fahrgeschwindigkeit 212, da die Abhängigkeit der geregelten Fahrgeschwindigkeit 210 von der erfassten Windgeschwindigkeit 124 oder 126 eine streng monoton steigende Funktion ist bei gegebener Topografie 200. Dadurch wird bei Gegenwind 202 aufgrund der quadratischen Geschwindigkeitsabhängigkeit des Luftwiderstands Antriebsenergie eingespart. Diese Einsparung ist beim Bezugszeichen 220 gezeigt.

Bei Rückenwind 204 ist die geregelte Fahrgeschwindigkeit 210 größer als die allein aufgrund der Topografie vorausberechnete Fahrgeschwindigkeit 212, da die Abhängigkeit der geregelten Fahrgeschwindigkeit 210 von der erfassten Windgeschwindigkeit 124 oder 126 eine streng monoton steigende Funktion ist bei gegebener Topografie 200. Dadurch wird bei Rückenwind 204 die zuvor bei Gegenwind verlorene Zeit zurückgewonnen. Dieser Zeitgewinn ist beim Bezugszeichen 222 gezeigt.

Aufgrund der quadratischen Geschwindigkeitsabhängigkeit des Luftwiderstands ist die größere Fahrgeschwindigkeit 210 bei Rückenwind mit weniger zusätzlicher Antriebsenergie verbunden als die Einsparung 220 bei Gegenwind 202, so dass summarisch Antriebsenergie eingespart wird ohne Zeitverlust.

Die Fahrtwindgeschwindigkeit (d.h., die negative Windgeschwindigkeit 124 im Bezugsystem des Nutzfahrzeugs 150) wird dabei durch den Windgeschwindigkeitssensor 120 intern oder über der Datenschnittstelle 122 extern in Kombination mit der erfassten Fahrgeschwindigkeit bestimmt.

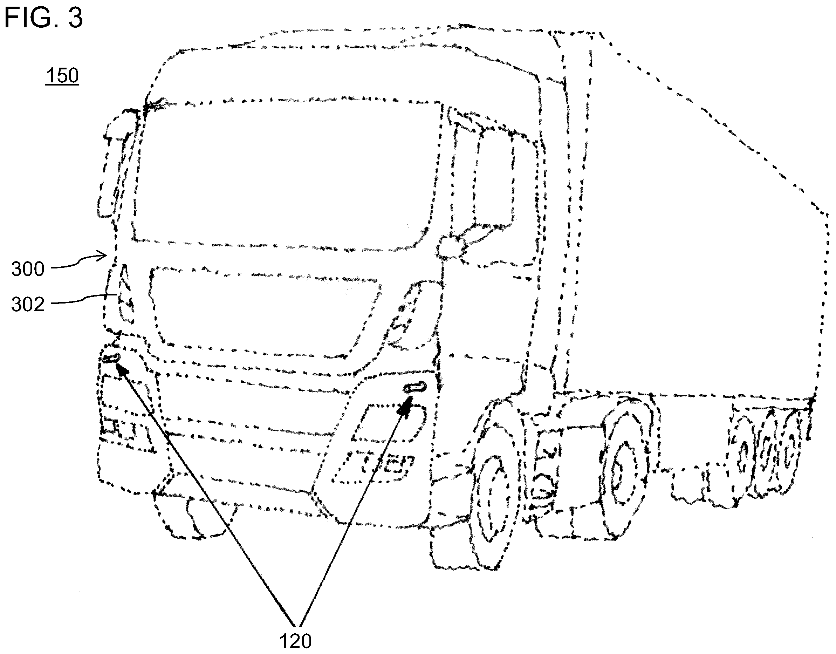

Figur 3 zeigt schematisch eine perspektivische Darstellung eines Nutzfahrzeugs 150 mit einem Ausführungsbeispiel des Windgeschwindigkeitssensors 120 an der Front 300 des Nutzfahrzeugs 150. Diese Sensorik am Nutzfahrzeug 150 dient der Bestimmung der Fahrtwindgeschwindigkeit, d.h. (bis auf das Vorzeichen) der Windgeschwindigkeit 124 im Bezugsystem des Nutzfahrzeugs 150.

Staudrucksonden als Windgeschwindigkeitssensoren 120 können oberhalb der Scheinwerfer oder in Luftleitöffnung 302 an der Front 300 des Nutzfahrzeugs 150 angeordnet sein.

Während im Ausführungsbeispiel der Figur 3 Staudrucksonden als Windgeschwindigkeitssensoren 120 gezeigt sind, kann alternativ oder ergänzend ein vorhandener Motorlüfter als Windgeschwindigkeitssensor 120 genutzt werden, beispielsweise als Anemometer gemäß der Offenlegungsschrift DE 10 2012 220 406 A1.

Vorzugsweise berücksichtigt die Regelungseinheit 140 ferner mögliche Getriebe-Schaltstrategien situativ bei der Regelung der Fahrgeschwindigkeit 210. Auch hier tritt der Effekt der Energieeinsparung summarisch ein. Die in Figur 2B schematisch gezeigte geregelte Fahrgeschwindigkeit 210 ist nicht einmal hypothetisch mit einer Fahrt bei konstanter Treibstoffeinspritzmenge oder einer konstanten Stellung des Gaspedals vergleichbar, weil ein solcher Fahrbetrieb mit einem Nutzfahrzeug (beispielsweise einem LKW) nicht möglich ist. Wenn man die gesetzliche Höchstgeschwindigkeit in der Ebene einhalten wollte, dann würde an einer größeren Steigung (d.h. bei einem Anstieg des Fahrwegs) die Fahrgeschwindigkeit auf nicht akzeptabel niedrige Werte sinken. Umgekehrt würde in der Ebene die erlaubte Höchstgeschwindigkeit (beispielsweise für LKW) überschritten.

Eine zweite Implementierung der Vorrichtung 100, beispielsweise das zweite Ausführungsbeispiel, regelt die Fahrgeschwindigkeit über dem Fahrweg anhand der Fahrgeschwindigkeit durch die Luft (d.h., die Fahrtwindgeschwindigkeit) derart, dass eine Optimierung des Zielkonfliktes von Treibstoffverbrauch ($CO_2$-Emission bei fossilen Brennstoffen) und durchschnittlicher Reisegeschwindigkeit erfolgt. Die Regelung erfolgt auf Basis von Daten über die Funkdatenschnittstelle 122 zu regionaler Windgeschwindigkeit und Windrichtung von einem Server (beispielsweise aus dem Internet) Das zweite Ausführungsbeispiel kann eine Implementierung von "Augmented Reality" oder "WEB 4.0" sein.

Bewegt sich das Nutzfahrzeug mit 80 km/h Fahrgeschwindigkeit und ist es windstill, dann ist auch die Fahrtwindgeschwindigkeit 80 km/h. Entsprechend zeigt sich ein normaler Luftwiderstand. Herrscht jedoch Gegenwind mit 10 km/h, so zeigt sich ein Luftwiderstand, der einer Fahrgeschwindigkeit von 90 km/h bei Windstille entspricht. Dabei geht die Fahrtwindgeschwindigkeit quadratisch in den Luftwiderstand ein. Eine Implementierung des zweiten Ausführungsbeispiels leitet die Fahrtwindgeschwindigkeit aus den externen Daten der Funkdatenschnittstelle 122 ab. Die Regelung der Fahrgeschwindigkeit 210 umfasst eine Reduzierung der Fahrgeschwindigkeit bei Gegenwind 202, um Treibstoff zu sparen, und eine Erhöhung der Fahrgeschwindigkeit im gesetzlich zulässigen Rahmen bei Rückenwind 204 zur Kompensation der bei Gegenwind 202 verlorenen Fahrtzeit. Der Optimierungseffekt tritt dabei summarisch über viele Tage auf, weil Gegenwind und Rückenwind sich bedingt durch Klima und Streckenführung (beispielsweise weil der LKW Rundkurse fährt) die Waage halten.

Die Erfassung der Fahrtwindgeschwindigkeit bzw. der Windgeschwindigkeit 124 im Bezugsystem des Nutzfahrzeugs 150 erfolgt dabei durch einen informationstechnologisch gestützten Abgleich von regionalen Wetterdaten aus dem Internet mit der aktuellen Position und/oder Route des Nutzfahrzeugs aufgrund der Ortung (beispielsweise mittels GPS und/oder bordeigenem Navigationssystem). Ergebnis des Abgleichs sind Fahrtwindgeschwindigkeiten relativ zum Koordinatensystem des Nutzahrzeugs 150. Aufgrund des summarischen Optimierungseffektes ist die Verwendung regionaler Wetterdaten an Stelle exakter lokaler Wetterdaten hinreichend. Wie anhand vorstehender exemplarischer Ausführungsbeispiel verdeutlicht, kann der Einfluss von Windstärke und Windrichtung auf den Zielkonflikt zwischen minimaler Antriebsenergie und vorgegebener oder minimaler Fahrzeit durch die Regelung in Abhängigkeit von der erfassten Windgeschwindigkeit bestimmt werden. In einem ersten Ausführungsbeispiel kann in Kombination mit der vorausliegenden Topografie eine überproportionale Einsparung von Antriebsenergie erreicht werden. In einem zweiten Ausführungsbeispiel, das mit dem ersten kombinierbar ist, können externe Messungen (beispielsweise mobile Messungen einer an den Server berichtenden Fahrzeugflotte, vernetzte stationäre Messstellen oder satellitenbasierte Luftströmungsmessungen) Grundlage der erfassten Windgeschwindigkeit sein.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Fahrsituation oder einen bestimmten Antriebsstrang an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

100 Vorrichtung zur Regelung einer Fahrgeschwindigkeit eines Nutzfahrzeugs
110 Fahrgeschwindigkeitssensor
112 Fahrgeschwindigkeit

| 114 | Fahrweg |
|---|---|
| 120 | Windgeschwindigkeitssensor |
| 122 | Datenschnittstelle, insbesondere Funkdatenschnittstelle |
| 124 | Windgeschwindigkeit im Bezugsystem des Nutzfahrzeugs |
| 126 | Windgeschwindigkeit im Bezugsystem des Fahrwegs |
| 130 | Ortungseinheit |
| 140 | Regelungseinheit |
| 150 | Nutzfahrzeug |
| 200 | Topografie, insbesondere Höhenprofil |
| 210 | Geregelte Fahrgeschwindigkeit |
| 212 | Topografisch vorausberechnete Fahrgeschwindigkeit |
| 214 | Vorgegebene Durchschnittsgeschwindigkeit |
| 220 | Energieeinsparung |
| 222 | Zeitgewinn |

**Patentansprüche**

1. Vorrichtung (100) zur Regelung einer Fahrgeschwindigkeit eines Nutzfahrzeugs (150), umfassend:

einen Fahrgeschwindigkeitssensor (110), der dazu ausgebildet ist, die Fahrgeschwindigkeit (112) des Nutzfahrzeugs (150) zu erfassen;
eine Ortungseinheit (130), die dazu ausgebildet ist, das Nutzfahrzeug (150) auf einem vom Nutzfahrzeug (150) befahrenen Fahrweg (114) zu orten; und
eine Regelungseinheit (140), die dazu ausgebildet ist, die Fahrgeschwindigkeit des Nutzfahrzeugs (150) abhängig von der erfassten Fahrgeschwindigkeit (112) und einer gemäß der Ortung auf dem Fahrweg (114) dem Nutzfahrzeug (150) vorausliegenden Topografie (200) zu regeln;
wobei die Vorrichtung (100) zur Regelung der Fahrgeschwindigkeit ferner umfasst:

einen Windgeschwindigkeitssensor (120) oder eine Datenschnittstelle (122), der bzw. die dazu ausgebildet ist, eine Windgeschwindigkeit (124; 126) am oder vor dem Nutzfahrzeug (150) zu erfassen;
wobei die Regelungseinheit (140) ferner dazu ausgebildet ist, die Fahrgeschwindigkeit des Nutzfahrzeugs (150) abhängig von der erfassten Windgeschwindigkeit (124; 126) zu regeln; und
wobei die geregelte Fahrgeschwindigkeit (210) bei der dem Nutzfahrzeug (150) vorausliegenden Topografie (200) eine steigende Funktion der erfassten Windgeschwindigkeit (124; 126) in Richtung der Fahrgeschwindigkeit ist

**dadurch gekennzeichnet, dass**

a) die erfasste Windgeschwindigkeit (124; 126) in Richtung der Fahrgeschwindigkeit eine Windgeschwindigkeit (124) im Bezugssystem des Nutzfahrzeugs (150) umfasst, wobei die geregelte Fahrgeschwindigkeit (210)

$$v_F^{(soll)} = v_F^{(topo)} + \varepsilon \cdot v'_W^{(ist)},$$

vorzugsweise angewendet falls $0 < v'_W^{(ist)}$, oder

$$v_F^{(soll)} = v_F^{(topo)} + \varepsilon \cdot \left( v'_W^{(ist)} + v_F^{(ist)} \right)$$

ist, wobei $v_F^{(topo)}$ eine aufgrund der vorausliegenden Topografie (200) vorausberechnete Fahrgeschwindigkeit (212) ist, $v'_W^{(ist)}$ die erfasste Windgeschwindigkeit (124; 126) im Bezugssystem des Nutzfahrzeugs (150) ist, ein Parameter $\varepsilon$ mit $0 < \varepsilon \le 1$ einen Grad einer Berücksichtigung der Windgeschwindigkeit (124; 126) ist, und gegebenenfalls $v_F^{(ist)}$ die erfasste Fahrgeschwindigkeit (112) ist; oder
b) die erfasste Windgeschwindigkeit (124; 126) eine Windgeschwindigkeit (126) in einem Bezugssystem des vom Nutzfahrzeug (150) befahrenen Fahrwegs (114) umfasst.

2. Vorrichtung (100) nach Anspruch 1, Variante b), wobei die geregelte Fahrgeschwindigkeit (210)

$$v_F^{(soll)} = v_F^{(topo)} + \varepsilon \cdot (v_W^{(ist)} - v_F^{(ist)}),$$

vorzugsweise angewendet $0 < v_F^{(ist)} < v_W^{(ist)}$, oder

$$v_F^{(soll)} = v_F^{(topo)} + \varepsilon \cdot v_W^{(ist)}$$

ist, wobei $v_F^{(topo)}$ eine aufgund der vorausliegenden Topografie (200) vorausberechnete Fahrgeschwindigkeit (212) ist, $v_w^{(ist)}$ die erfasste Windgeschwindigkeit (124; 126) in Richtung der Fahrgeschwindigkeit ist, ein Parameter $\varepsilon$ mit $0 < \varepsilon \leq 1$ einen Grand einer Berücksichtigung der Windgeschwindigkeit (124; 126) ist, und gegebenenfalls $v_F^{(ist)}$ die erfasste Fahrgeschwin digkeit (112) ist.

3. Vorrichtung (100) nach Anspruch 1, Variante a) oder 2, wobei der Parameter $\varepsilon$ des Grads der Berücksichtigung der Windgeschwindigkeit (124; 126) von der vorausliegende Topografie (200) und/oder einem Wirkungsgrad-optimierten Betriebspunkt oder Betriebsbereich eines Antriebsstrangs des Nutzfahrzeugs (150) abhängt.

4. Vorrichtung (100) nach eniem der Ansprüche 1 bis 3, wobei die datenschnittstelle (122) eine Funkdatenschnittselle zu einem Server umfasst, der Wetterdaten bereitstellt, welche die Windgeschwindigkeit (124; 126) am oder vor dem georteten Nutzfahrzeug (150) umfassen.

5. Vorrichtung (100) nach einem der Ansprüche 1 bis 4, wobei der Windgeschwindigkeitssensor (120) mindestens einem Dehnungsmessstreifen umfasst zwischen einem Fahrgestell und einer Karosserie des Nutzfahrzeugs (15), insbesondere zwischen Fahrgestell und Fahrerhaus des Nutzfahrzeugs (150), und wobei der mindestens eine Dehnungsmessstreifen dazu audgebildet ist, einen von der Windgeschwindigkeit (124; 126) im bezugssystem des Nutzfahrzeugs (150) abhängigen Staudruck zu erfassen, vozugsweise einschließlich eines Anpralldrucgs eines Niederschlags.

6. Vorrichtung (100) nach einem der Ansprüche 1 bis 5, wobei der Windgeschwindigkeitssensor (120) mindestens eine an einer Front des Nutzfahrzeugs (150) angeordnete Staudrucksonde umfasst, die dazu ausgebildet ist, einen von der Windgeschwindigkeit (124; 126) im Bezugssystem des Nutzfahrzeugs (150) abhängigen Staudruck zu erfassen.

7. Vorrichtung (100) nach einem der Ansprüche 1 bis 6, wobei die geregelte Fahrgeschwindigkeit (210) von der erfassten Windgeschwindigkeit (124; 126) abhängt, falls die erfasste Fahrgeschwindigkeit (112) und/oder die aufgrund der vorausliegenden Topografie (200) vorausberechnete Fahrgeschwindigkeit größer als eine Mindestgeschwindigkeit, vorzugsweise 60 km/h, ist.

8. Vorrichtung (100) nach einem der Ansprüche 1 bis 7, wobei die Regelungseinheit (140) ferner dazu ausgebildet ist, einen Schaltpunkt eines automatischen Getriebes im Antriebsstrang des Nutzfahrzeugs (150) bei der Regelung der Fahrgeschwindigkeit zu berücksichtigen, wobei eine allein aufgrund der Topgrafie vorausberechnete Fahrgeschwindigkeit kleiner als der Schaltpunkt ist und die geregelte Fahrgeschwindigkeit (210) größer als der Schaltpunkt ist, falls die vorausliegende Topografie (200) einen Anstieg aufweist und die erfasste Windgeschwindigkeit (124; 126) einem Rückenwind entspricht.

9. Nutzfahrzeug, insbesondere Lastkraftwagen, Zugmaschine oder Bus, umfassend:

einen Antriebsstrang; und
eine den Antriebsstrang steuernde Vorrichtung (100) gemäß einem der Ansprüche 1 bis 8.

**Claims**

1. Device (100) for regulating a driving speed of a commercial vehicle (150), comprising:

a driving speed sensor (110) configured to detect the driving speed (112) of the commercial vehicle (150);
a locating unit (130) configured to locate the commercial vehicle (150) on a roadway (114) traveled by the commercial vehicle (150); and
a control unit (140) configured to regulate the driving speed of the commercial vehicle (150) depending on the detected driving speed (112) and a topography (200) ahead of the commercial vehicle (150) according to the location on the roadway (114);

wherein the device (100) for regulating the driving speed further comprises:

a wind speed sensor (120) or a data interface (122) configured to detect a wind speed (124; 126) at or ahead of the commercial vehicle (150);

wherein the control unit (140) is further configured to regulate the driving speed of the commercial vehicle (150) depending on the detected wind speed (124; 126); and

wherein the regulated driving speed (210) for the topography (200) ahead of the commercial vehicle (150) is an increasing function of the detected wind speed (124; 126) in the direction of the driving speed

**characterized in that**

a) the detected wind speed (124; 126) in the direction of the driving speed comprises a wind speed (124) in the reference frame of the commercial vehicle (150), wherein the regulated driving speed (210) is

$$v_F^{(set)} = v_F^{(topo)} + \varepsilon \cdot v'_W{}^{(actual)},$$

preferably applied if $0 < v'_W{}^{(actual)}$, or

$$v_F^{(set)} = v_F^{(topo)} + \varepsilon \cdot \left( v'_W{}^{(actual)} + v_F^{(actual)} \right),$$

wherein $v_F^{(topo)}$ is a precomputed driving speed (212) based on the topography (200) ahead, $v'_W{}^{(actual)}$ is the detected wind speed (124; 126) in the reference frame of the commercial vehicle (150), a parameter $\varepsilon$ with $0 < \varepsilon \leq 1$ is a degree of consideration of the wind speed (124; 126), and if applicable $v_F^{(actual)}$ is the detected driving speed (112); or

b) the detected wind speed (124; 126) comprises a wind speed (126) in a reference frame of the roadway (114) traveled by the commercial vehicle (150).

2. Device (100) according to Claim 1, variant b), wherein the regulated driving speed (210) is:

$$v_F^{(set)} = v_F^{(topo)} + \varepsilon \cdot \left( v_W^{(actual)} - v_F^{(actual)} \right),$$

preferably applied if $0 < v_F^{(actual)} < v_W^{(actual)}$, or

$$v_F^{(set)} = v_F^{(topo)} + \varepsilon \cdot v_W^{(actual)}$$

wherein $v_F^{(topo)}$ is a precomputed driving speed (212) based on the topography (200) ahead, $v_W^{(actual)}$ is the detected wind speed (124; 126) in the direction of the driving speed, a parameter $\varepsilon$ with $0 < \varepsilon \leq 1$ is a degree of consideration of the wind speed (124; 126), and if applicable $v_F^{(actual)}$ is the detected driving speed (112).

3. Device (100) according to Claim 1, variant a) or 2, wherein the parameter $\varepsilon$ representing the degree of consideration of the wind speed (124; 126) depends on the topography (200) ahead and/or an efficiency-optimized operating point or operating range of a drivetrain of the commercial vehicle (150).

4. Device (100) according to any of Claims 1 to 3, wherein the data interface (122) comprises a wireless data interface to a server providing weather data that includes the wind speed (124; 126) at or ahead of the located commercial vehicle (150).

5. Device (100) according to any of Claims 1 to 4, wherein the wind speed sensor (120) comprises at least one strain gauge arranged between a chassis and a body of the commercial vehicle (150), particularly between the chassis and the driver's cab of the commercial vehicle (150), and wherein the at least one strain gauge is configured to detect a dynamic pressure dependent on the wind speed (124; 126) in the reference frame of the commercial vehicle (150), preferably including an impact pressure of precipitation.

6.  Device (100) according to any of Claims 1 to 5, wherein the wind speed sensor (120) comprises at least one dynamic pressure probe arranged at a front of the commercial vehicle (150), which is configured to detect a dynamic pressure dependent on the wind speed (124; 126) in the reference frame of the commercial vehicle (150).

7.  Device (100) according to any of Claims 1 to 6, wherein the regulated driving speed (210) depends on the detected wind speed (124; 126) if the detected driving speed (112) and/or the precomputed driving speed based on the topography (200) ahead is greater than a minimum speed, preferably 60 km/h.

8.  Device (100) according to any of Claims 1 to 7, wherein the control unit (140) is further configured to consider a shift point of an automatic transmission in the drivetrain of the commercial vehicle (150) when regulating the driving speed, wherein a precomputed driving speed based solely on the topography is lower than the shift point, and the regulated driving speed (210) is higher than the shift point if the topography (200) ahead includes an incline and the detected wind speed (124; 126) corresponds to a tailwind.

9.  Commercial vehicle, particularly a truck, tractor unit, or bus, comprising:

    a drivetrain; and
    a device (100) according to any of Claims 1 to 8 that controls the drivetrain.

**Revendications**

1.  Dispositif (100) de régulation d'une vitesse de déplacement d'un véhicule utilitaire (150), comprenant :

    un capteur de vitesse de déplacement (110) conçu pour détecter la vitesse de déplacement (112) du véhicule utilitaire (150) ;
    une unité de localisation (130) conçue pour localiser le véhicule utilitaire (150) sur un trajet de déplacement (114) emprunté par le véhicule utilitaire (150) ; et
    une unité de régulation (140) conçue pour réguler la vitesse de déplacement du véhicule utilitaire (150) en fonction de la vitesse de déplacement détectée (112) et d'une topographie (200) située à l'avant du véhicule utilitaire (150) selon la localisation sur le trajet de déplacement (114) ;
    le dispositif (100) de régulation de la vitesse de déplacement comprenant en outre :

    un capteur de vitesse du vent (120) ou une interface de données (122) conçu(e) pour détecter une vitesse du vent (124 ; 126) sur ou devant le véhicule utilitaire (150) ; l'unité de régulation (140) étant en outre conçue pour réguler la vitesse de déplacement du véhicule utilitaire (150) en fonction de la vitesse du vent détectée (124 ; 126) ; et
    la vitesse de déplacement régulée (210) étant, dans le cas de la topographie (200) située à l'avant du véhicule utilitaire (150), une fonction croissante de la vitesse du vent (124 ; 126) détectée dans la direction de la vitesse de déplacement,
    **caractérisé en ce que**

    a) la vitesse du vent (124 ; 126) détectée dans la direction de la vitesse de déplacement comprend une vitesse du vent (124) dans le référentiel du véhicule utilitaire (150), la vitesse de déplacement régulée (210) étant

$$v_F^{(soll)} = v_F^{(topo)} + \varepsilon \cdot v'^{(ist)}_W,$$

    de préférence appliquée dans le cas où $0 < v'^{(ist)}_W$, ou

$$v_F^{(soll)} = v_F^{(topo)} + \varepsilon \cdot (v'^{(ist)}_W + v_F^{(ist)})$$

    où $v_F^{(topo)}$ est une vitesse de déplacement (212) précalculée sur la base de la topographie (200) située à l'avant, $v'^{(ist)}_W$ est la vitesse du vent (124 ; 126) détectée dans le référentiel du véhicule utilitaire (150), un paramètre $\varepsilon$, avec $0 < \varepsilon \leq 1$, représente un degré de prise en compte de la vitesse du vent (124 ; 126), et le cas échéant, $v_F^{(ist)}$ est la vitesse de déplacement détectée (112) ; ou
    b) la vitesse du vent (124 ; 126) détectée comprend une vitesse du vent (126) dans un référentiel du trajet de déplacement (114) emprunté par le véhicule utilitaire (150).

**2.** Dispositif (100) selon la revendication 1, variante b), dans lequel la vitesse de déplacement régulée (210) est

$$v_F^{(soll)} \;=\; v_F^{(topo)} \;+\; \varepsilon \cdot (v_W^{(ist)} \;-\; v_F^{(ist)}),$$

de préférence appliquée dans le cas où $0 < v_F^{(ist)} < v_W^{(ist)}$, ou

$$v_F^{(soll)} \;=\; v_F^{(topo)} \;+\; \varepsilon \cdot v_W^{(ist)}$$

où $v_F^{(topo)}$ est une vitesse de déplacement (212) précalculée sur la base de la topographie (200) située à l'avant, $v_W^{(ist)}$ est la vitesse du vent (124 ; 126) détectée dans la direction de la vitesse de déplacement, un paramètre $\varepsilon$, avec $0 < \varepsilon \le 1$, représente un degré de prise en compte de la vitesse du vent (124 ; 126), et éventuellement $v_F^{(ist)}$ est la vitesse de déplacement détectée (112).

**3.** Dispositif (100) selon la revendication 1, variante a) ou 2, dans lequel le paramètre $\varepsilon$ du degré de prise en compte de la vitesse du vent (124 ; 126) dépend de la topographie (200) située à l'avant et/ou d'un point de fonctionnement ou d'une plage de fonctionnement optimisée du point de vue du rendement d'une chaîne cinématique du véhicule utilitaire (150).

**4.** Dispositif (100) selon l'une des revendications 1 à 3, dans lequel l'interface de données (122) comprend une interface de données radio avec un serveur qui fournit des données météorologiques, lesquelles comprennent la vitesse du vent (124 ; 126) sur ou devant le véhicule utilitaire localisé (150).

**5.** Dispositif (100) selon l'une des revendications 1 à 4, dans lequel le capteur de vitesse du vent (120) comprend au moins une jauge de contrainte entre un châssis et une carrosserie du véhicule utilitaire (150), en particulier entre le châssis et la cabine du véhicule utilitaire (150), et dans lequel l'au moins une jauge de contrainte est conçue pour détecter une pression dynamique dépendant de la vitesse du vent (124 ; 126) dans le référentiel du véhicule utilitaire (150), de préférence y compris une pression d'impact de précipitations.

**6.** Dispositif (100) selon l'une des revendications 1 à 5, dans lequel le capteur de vitesse du vent (120) comprend au moins une sonde de pression dynamique disposée à l'avant du véhicule utilitaire (150), conçue pour détecter une pression dynamique dépendant de la vitesse du vent (124 ; 126) dans le référentiel du véhicule utilitaire (150).

**7.** Dispositif (100) selon l'une des revendications 1 à 6, dans lequel la vitesse de déplacement régulée (210) dépend de la vitesse du vent (124 ; 126) détectée dans le cas où la vitesse de déplacement détectée (112) et/ou la vitesse de déplacement précalculée sur la base de la topographie (200) située à l'avant est supérieure à une vitesse minimale, de préférence 60 km/h.

**8.** Dispositif (100) selon l'une des revendications 1 à 7, dans lequel l'unité de régulation (140) est en outre conçue pour prendre en compte un point de changement de vitesse d'une transmission automatique dans la chaîne cinématique du véhicule utilitaire (150) lors de la régulation de la vitesse de déplacement, une vitesse de déplacement précalculée uniquement sur la base de la topographie étant inférieure au point de changement de vitesse et la vitesse de déplacement régulée (210) étant supérieure au point de changement de vitesse dans le cas où la topographie (200) située à l'avant présente une montée et dans le cas où la vitesse du vent détecté (124 ; 126) correspond à un vent arrière.

**9.** Véhicule utilitaire, en particulier véhicule utilitaire, tracteur ou bus, comprenant :

une chaîne cinématique ; et
un dispositif (100) commandant la chaîne cinématique selon l'une des revendications 1 à 8.

FIG. 1

## FIG. 2A

202     204

126

200

150

114

## FIG. 2B

Fahrtgeschwindigkeit(v)in Abhängigkeit von Topografie und Wind

210   210

212

212

212

210, 212

214

220

210

220

210

222

222

222   212

$V$ Soll Tempomat, durchschnittlich     $V$ geregelt, Topografie     $V$ geregelt, Topografie und Wind

Treibstoffersparnis
bei Gegenwind

212

Einholen von Zeit
bei Rückenwind

210

220

222

EP 3 996 964 B1

FIG. 3

150

300

302

120

EP 3 996 964 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012158097 A1
- US 20190138021 A1
- DE 102005045891 B3
- DE 102012220406 A1